# EUROPÄISCHE PATENTSCHRIFT

(11) **EP 2 450 240 B1**
(45) Veröffentlichungstag und Bekanntmachung des Hinweises auf die Patenterteilung: **26.03.2014**
(21) Anmeldenummer: 10189910.2
(22) Anmeldetag: 03.11.2010
(51) Int. Cl.: B60R 13/06

(54) **Mehrteilige Blendenleiste**
Multiple part cover bar
Baguette de jonction en plusieurs parties

(43) Veröffentlichungstag der Anmeldung: 09.05.2012
(73) Patentinhaber: DURA Automotive Body & Glass Systems GmbH, 58840 Plettenberg (DE)
(72) Erfinder: Kunen, Rafael, 58840, Plettenberg (DE); Brandt, Olaf, 58809, Neuenrade (DE)
(74) Vertreter: Tersteegen, Felix

(56) Entgegenhaltungen:
- EP-A2- 0 431 964
- DE-C1- 19 839 495

## Beschreibung

Die Erfindung betrifft den Aufbau einer Blendenleiste, die als Anbauteil für ein Kraftfahrzeug dient, wobei die Blendenleiste eine Basisleiste und eine an der Basisleiste befestigte oder bestimmungsgemäß befestigbare Dichtleiste umfasst, wobei die Dichtleiste eine Dichtlippe zur Abdichtung und/oder optischen Überbrückung eines im bestimmungsgemäßen Einbauzustand zwischen der Blendenleiste und einer benachbarten Fahrzeugoberfläche entstehenden Spalts aufweist, wobei die Dichtleiste ein oder mehrere Verbindungsglieder aus einem gegenüber dem Material der Dichtlippe struktursteiferen Material aufweist und die Dichtleiste als von der Basisleiste getrenntes oder trennbares Bauteil mittels der Verbindungsglieder über an der Basisleiste befindliche, korrespondierende Gegenstücke mit der Basisleiste verbindbar ist.

Blendenleisten werden als äußeres Design- und Funktionselement an Fahrzeugkarosserien eingesetzt. Sie dienen dazu, die Fahrzeugaußenseite dadurch mitzugestalten, dass sie Spalte zwischen Karosserieteilen optisch und aerodynamisch überbrücken und eine möglichst unzerklüftete FahrzeugaußenfLäche schaffen. Außerdem tragen sie Funktionsteile wie Dichtungen.

Aus der von der Anmelderin selbst stammenden EP 1 584 517 A2 ist eine Blendenleiste bekannt, die neben einer Basisleiste eine Dichtleiste umfasst. An der Dichtleiste vorgesehene Verbindungsglieder werden mit an der Basisleiste vorgesehenen Aufnahmen verrastet, so dass die Dichtleiste im Anschluss daran fest mit der Basisleiste zur Bildung der Blendenleiste verbunden ist. Ebenfalls aus der EP 1 584 517 A2 ist es bekannt, dass eine Dichtleiste als Weichkunststoffkomponente an die Basisleiste in einem Mehrkomponentenspritzgussverfahren angespritzt wird. Diese Methoden zur Herstellung einer Dichtleiste haben allerdings eine Reihe von Nachteilen, deren Behebung sich die Erfindung zur Aufgabe macht.

Die deutsche Patentschrift DE 198 39 495 C1 offenbart einen Profileinsatz zur Einfassung von Fenstern in Bussen oder anderen Personenbeförderungsfahrzeugen, bei dem auf ein Grundprofil ein Beisteckprofil aufgesetzt ist, das mit einer weichen Anlegelippe versehen ist. Um einen sicheren Halt des Beisteckprofils auf dem Grundprofil zu gewährleisten, ist das Beisteckprofil auf dem Grundprofil verrasted. Bei der in der DE 198 39 495 C1 gezeigten Konstruktion ist das Beisteckprofil allerdings sehr exponiert angeordnet und die zwischen den einzelnen Bauteilen von außen erkennbaren Fugen lassen das Bauteil insgesamt sehr zerklüftet erscheinen, was für an Personenkraftwagen vorgesehene Zierteile nicht akzeptabel ist.

Die europäische Offenlegungsschrift EP 0 431 964 A2 offenbart einen Aufbau einer Abdeckleiste zur Überbrückung des Spalts zwischen Fahrzeugkarosserie und aufgeklebter Windschutzscheibe, bei der ein erstes Leistenteil mit einer sich an die Scheibe anlegenden Dichtlippe zum Einsatz kommt, das auf ein zweites Leistenteil aufsteckt wird. Eine definierte Verrastung der Leistenteile miteinander in eine sich parallel zu den Leistenteilen erstreckende Richtung findet nicht statt. Konstruktionsbedingt muss das erste Leistenteil, dass die Dichtlippe trägt, mit der Fahrzeugkarosserie verbunden werden, um das eine äußere Dekorfläche bildende zweite Leistenteil zu tragen. Infolge dessen muss das erste Leistenteil die zur Befestigung der gesamten Abdeckleiste an der Karosserie auftretenden Kräfte aufnehmen. Außerdem werden etwaige Fehlstellungen des ersten Leistenteils relativ zur Karosserie unmittelbar auch durch das zweite Leistenteil übernommen. Eine zumindest zum Teil unabhängige Ausrichtung der Leistenteile zueinander trotz sicherer Verrastung ist nicht möglich.

Bei einer materialhomogenen Dichtleiste aus Weichkunststoff, die als separates Bauteil nach dem Spritzgießvorgang der Basisleiste mit dieser verrastet wird, ist sowohl die Dichtleiste selbst als auch die Rastverbindung mit der Basisleiste in sich wenig steif und belastbar. Es kann leicht zum Ausreißen der Dichtleiste kommen. Will man die Dichtleiste nicht mit der Basisleiste verrasten bzw. verklemmen, sondern diese damit beispielsweise verkleben, verschweißen, vernieten oder verschrauben, ist dies in aller Regel nicht oder nur schwierig möglich. Die zumeist ungeeignete Materialpaarung der Dichtleiste aus Weichkunststoff und der Basisleiste, die zumindest außenseitig aus einem schlagzähen, kratzunempfindlichen Kunststoff hergestellt wird, erlaubt eine nachträglich herzustellende, stoffschlüssige Verbindung regelmäßig nicht. Ein nachträgliches Verschrauben oder Vernieten gestaltet sich schwierig, weil der Weichkunststoff der Dichtleiste die hohen Klemmkräfte, die erforderlich sind, damit eine solche Verbindung dauerhaft hält, nicht aufzunehmen vermag. Wenn überhaupt sind solche Verbindungen zwischen Basisleiste und Dichtleiste nur unter Zuhilfenahme weiterer, aufwendiger Arbeitsschritte oder zusätzlicher Bauteile sinnvoll möglich. Beides will man für einen schlanken Herstellungsprozess aber nach Möglichkeit vermeiden. Eine Aufgabe der Erfindung ist es daher, eine Blendenleiste als Kombination aus Dichtleiste und Basisleiste zur Verfügung zu haben, die ein breiteres Spektrum an einfach zu realisierenden und ausreichend belastbaren Verbindungsmöglichkeiten schafft.

Wird die Dichtleiste im Mehrkomponenten-Spritzgussverfahren direkt an die Basisleiste, die üblicherweise bereits eine erste und eine zweite Kunststoffkomponente aufweist, angespritzt, ist eine 3-Komponenten Spritzgussanlage erforderlich. Diese ist erheblich aufwendiger als eine 2-Kompenenten Anlage. Für etwaig vorzunehmende Designänderungen an der Dichtlippe oder am Basisteil ist es nachteilig, dass eine solche Designänderung Einfluss auf alle in der 3-Komponentenanlage verwendeten Werkzeuge haben kann, so dass alle Werkzeuge der 3-Komponentenanlage nachzubearbeiten oder auszutauschen sind, auch wenn die Designänderung letztlich nur eines der Bauteile betrifft. Eine weitere Aufgabe der Erfindung besteht daher darin, eine Baugruppe aus Basisleiste und Dichtleiste zur Verfügung zu stellen, für die eine 3-Komponentenspritzgussanlage nicht erforderlich ist und bei der Änderungen an einem der Bauteile bzw. dem hierfür vorgesehen Werkzeug keine Änderungen an dem jeweils anderen Bauteil bzw. dem hierfür vorgesehen Werkzeug erforderlich machen. Im Ergebnis können bei konstruktiven Änderungen Zeit und Kosten gespart werden.

Ein weiterer Nachteil der Mehrkomponentenspritzgusstechnik ist es, dass bei der konstruktiven Gestaltung des Gesamtbauteils auch hinsichtlich seiner aus unterschiedlichen Materialen gespritzten Einzelkomponenten stets auf den Spritzgussprozess für das Gesamtbauteil Rücksicht zu nehmen ist. So kann beispielsweise eine Dichtlippe nicht immer in optimaler Ausrichtung an das Basisteil angespritzt werden, weil diese Ausrichtung sich nicht mit der für das Gesamtteil erforderlichen Hauptentformungsrichtung verträgt, sondern nicht tolerierbare Hinterschnitte im Werkzeug bedeuten würde. Ein weiterer Aspekt betrifft die Materialauswahl, da beim Mehrkomponentenspritzguss naturgemäß nur kompatible Materialien, die sich beim Spritzgussvorgang miteinander stoffschlüssig verbinden können, in Frage kommen. Außerdem kann es auch von Interesse sein, das Basisteil aus einem gar nicht spritzgussfähigen Material herzustellen, beispielsweise als hochwertige Aluminium- oder Edelstahlleiste. Eine weitere Aufgabe der Erfindung ist es daher, eine Blendenleistenkonstruktion bereit zu stellen, die dem Konstrukteur größere konstruktive Freiheiten insbesondere bei der räumlich-körperlichen Gestaltung und bei der Materialauswahl lässt.

Weiter von Vorteil wäre eine Blendenleistenkonstruktion, bei der die Dichtleiste als auf die Basisleiste zu montierendes Zusatzteil leicht ausgetauscht werden könnte. Dies würde es zum einen möglich machen, einen defekten Leistenteil auszutauschen, ohne gleichzeitig auch den anderen ersetzen zu müssen. Zum anderen könnte so für verschiedene Fahrzeugmodelle auf die gleiche Basisleiste bzw. die gleiche Dichtleiste zurückgegriffen werden, auch wenn für das jeweilige Fahrzeugmodell eine andere Dichtleiste bzw. ein anderes Basisteil benötigt werden würde. Insbesondere für die Dichtleiste wäre wünschenswert, diese fahrzeugmodeltunabhängig einsetzen zu können und eine eventuell erforderliche unterschiedliche Ausrichtung bei verschiednen Fahrzeugmodellen anhand von konstruktiven Maßnahmen am Basisteil realisieren zu können. Eine weitere Aufgabe der Erfindung besteht somit darin, eine Blendenleistekonstruktion zu schaffen, bei der die Dichtleiste und/oder die Basisleiste fahrzeugmodellübergreifend als Standardteil einsetzbar sind.

Diese eingangs genannte Ausgestaltung macht es unter anderem möglich, dass der Teil der Dichtleiste, der das Verbindungsglied bildet, mit dem die Dichtleiste an der Basisleiste befestigt wird, Materialeigenschaften aufweist, die geeigneter sind als die des für die Dichtlippe erforderlichen Weichkunststoffs. Sofern an der Basisleiste zu den Verbindungsgliedern kompatible Gegenstücke vorhanden sind, lässt sich die Dichtleiste somit ohne Rücksicht auf die getroffene Materialauswahl an der Basisleiste befestigen. Hinsichtlich der Auswahl der Befestigungmittel, mit der die Dichtleiste auf der Basisleiste arretierbar ist, sind dem Konstrukteur kaum Grenzen gesetzt.

Der Begriff "struktursteifer" ist dabei insbesondere so zu verstehen, dass es sich um ein Material mit höherer Festigkeit handelt. Diese Eigenschaft kann insbesondere bei Kunststoffen auch dadurch erreicht werden, dass für die Ausbildung der Verbindungsglieder zwar das gleiche Grundmaterial, insbesondere der gleiche Kunststofftyp, wie für die Dichtlippe verwendet wird, aber auf eine andere Zusammensetzung zurückgegriffen wird, es beispielsweise einen geringeren Weichmacheranteil aufweist.

Aufgabe der Erfindung ist es, einen Blendenleistenaufbau der eingangs genannten Art zur Verfügung zu stellen, bei der die Dichtleiste in einfacher Weise mit der Blendenleiste verbunden werden kann, bei der eine zumindest in Teilen unabhängige Ausrichtung der Dichtleiste gegenüber der Blendenleiste gewährleistet ist und bei der die Dichtleiste in einer Art und Weise an der Blendenleiste befestigbar ist, dass die Dichtleiste optisch möglichst nicht erkennbar, insbesondere durch die Blendenleiste verdecktist.

Zur Fixierung der Dichtleiste auf der Basisleiste weist die Dichtleiste daher mehrere Verbindungsglieder auf, die mit an der Basisleiste vorhandenen kompatiblen Gegenstücken zusammenwirken, wobei die Paarung aus Verbindungsgliedern und korrespondierenden Gegenstücken derart ausgestaltet ist, dass die Dichtleiste zunächst in einer im Wesentlichen senkrecht zur im bestimmungsgemäßen Einbauzustand nach innen weisenden Innenfläche der Basisleiste gerichteten Aufsetzbewegung auf die Basisleiste aufgesetzt wird und sodann durch eine parallel zur besagten Innenseite gerichtete Schiebebewegung, also eine Schiebebewegung in z-Richtung, mit der Basisleiste verrastet, so dass die Dichtleiste relativ zur Basisleiste räumlich fixiert ist. Die Montagebewegung setzt sich also bevorzugt aus einer Kombination aus Aufsetz- und Schiebebewegung zusammen.

Als vorteilhaft anzusehen ist es, wenn das Material der Dichtlippe an das Material der Verbindungsglieder angespritzt ist. Somit bilden Dichtlippe und Verbindungsglieder einen untrennbaren Materialverbund, bei dem die Verbindungsglieder in das Material der Dichtlippe untrennbar eingebettet sind. Die Verbindungsglieder können dabei vor dem eigentlichen Spritzgussprozess in das Spritzgusswerkzeug eingelegt werden. Bevorzugt wird die Dichtlippe jedoch im Mehrkomponentenspritzgussverfahren hergestellt, bei dem nach dem Spritzgussvorgang für die Verbindungsglieder das Dichtlippenmaterial ohne vorhergehendes Entformen der Verbindungsglieder an das Material der Verbindungsglieder angespritzt wird.

Auf der Dichtleiste können verschiedenartige Verbindungsglieder vorgesehen sein, die mit jeweils verschiedenartigen, an das jeweilige Verbindungsglied angepassten korrespondierenden Gegenstücken auf der Basisleiste zusammenwirken. Selbstverständlich ist es auch möglich, dass alle auf der Dichtleiste vorgesehenen Verbindungsglieder ebenso wie die korrespondierenden Gegenstücke an der Basisleiste gleichartig sind.

Die räumliche Fixierung der Dichtleiste an der Basisleiste in x, y und z-Richtung wird über einen oder mehrere verschiedene Anschläge an den Verbindungsgliedern und den Gegenstücken realisiert. Die Anschläge bilden Anschlagpunkte oder Anschlagflächen aus, an denen Verbindungsglieder und Gegenstücke als Begrenzung der Montagebewegung aneinander anstoßen. Zur räumlichen Fixierung der Dichtleiste auf der Basisleiste reicht grundsätzlich ein einziger Anschlag pro Richtung und Dichtleiste aus, wobei bevorzugt aber mehrere Anschläge vorgesehen sind.

Um die Dichtleiste dauerhaft in der durch die Anschläge definierten Position zu halten, ist bevorzugt zumindest ein Rastglied an der Dichtleiste und/oder der Basisleiste vorgesehen. Das Rastglied federt bei der Aufsetzbewegung und/oder der Schubbewegung bevorzugt zunächst ein, um anschließend zur räumlichen Fixierung der Dichtleiste auf der Basisleiste ein Bauteil des jeweils anderen Blendenleistenteils rückfedernd formschlüssig zu hintergreifen. Ein anschließendes zerstörungsfreies Entfernen der Dichtleiste von der Basisleiste ist dann nur bei gleichzeitiger Betätigung des Rastgliedes möglich.

Um die Dichtleiste dauerhaft spielfrei an der Basisleiste zu halten, ist vorgesehen, dass die Dichtleiste bei ordnungsgemäßem Zusammenbau dauerhaft gegen die Innenfläche der Basisleiste mittels einer Klemmkraft angestellt ist. Hierzu ist die Dichtleiste zwischen den Anschlägen der Basisleiste, die einem Abheben der Dichtleiste von der Basisleiste entgegenwirken, und der Basisleisteninnenfläche verspannt. Das Verspannen wird bevorzugt dadurch erreicht, dass die Klemmweite der Gegenstücke an der Basisleiste geringfügig kleiner ist als die Klemmweite der Verbindungsglieder an der Dichtleiste. Der Abstand der an der Dichtleiste vorgesehenen Anschlagflächen oder Anschlagpunkte, die zur Vermeidung eines Abhebens von den an der Basisleiste vorgesehenen Gegenstücken übergriffen werden, zu den Kontaktstellen, die nach dem Zusammenbau mit der Innenseite der Basisleiste in Anlage kommen, ist also geringfügig größer als der Abstand zwischen der Innenfläche der Basisleiste und den einem Abheben entgegenwirkenden Anschlägen der Gegenstücke bei nicht aufgesetzter Dichtleiste. Zu diesem Zweck können insbesondere an der Seite der Dichtleiste, die bei bestimmungsgemäßen Zusammenbau der Innenfläche der Basisleiste zugewandt ist, Erhebungen vorgesehen, die bei der Aufsetzbewegung und/oder der anschließenden Aufschiebebewegung ein Einfedern der mit Verbindungsgliedern versehenen Abschnitte der Dichtleiste oder der Verbindungsglieder selbst ermöglichen.

Um die Montagebewegung, insbesondere die Aufschiebebewegung, zu erleichtern und um ein Verkanten oder Verhaken der Dichtleiste zu verhindern, weisen zumindest ein Teil der Verbindungsglieder und/oder zumindest ein Teil der korrespondierenden Gegenstücke Montageschrägen auf, die für ein allmähliches Ineinandergreifen der Verbindungsglieder und der jeweils zugeordneten Gegenstücke Sorge tragen. So kann die Aufsetzbewegung noch relativ grob erfolgten und die Ausrichtung und die Verspannung der Dichtleiste an der Basisleiste erfolgt, geführt durch die Montageschrägen, während der Aufschiebewegung.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
Fig. 1 einen Querschnitt einer nicht zur Erfindung gehörigen Ausgestaltung einer Blendenleiste, die in einem 3 Komponenten Spritzgussverfahren hergestellt ist,
Fig. 2 einen Querschnitt einer erfindungsgemäßen Blendenleiste,
Fig. 3 Einzelheit A aus Figur 2,
Fig. 4 die Blendenleiste aus Figur 4 mit einer noch nicht auf eine Basisleiste aufmontierten Dichtleiste, und
Fig. 5 die Blendenleiste aus den Figur 3 mit der auf die Basisleiste aufmontierten Dichtleiste,
Fig. 6 Einzelheit B aus Figur 5,
Fig. 7 ein Sicherungselement zur Arretierung der Dichtleiste im Detail,
Fig. 8 ein Verbindungsglied der Dichtleiste aus den Figuren 4 bis 6 im Detail, und
Fig. 9 ein zum Verbindungsglied aus Figur 8 korrespondierendes Gegenstück an der Basisleiste.

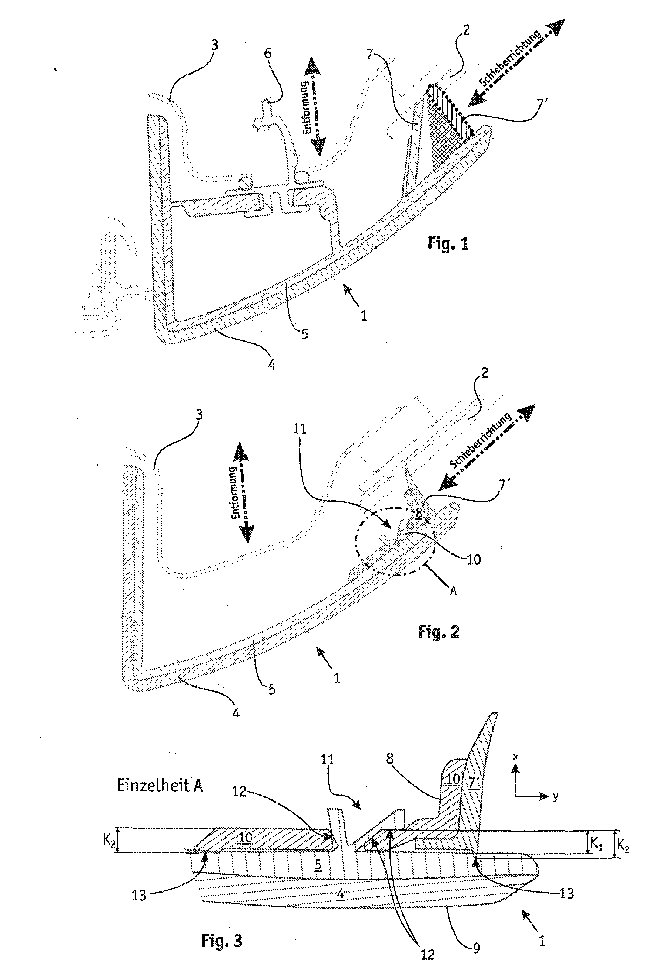

In Figur 1 ist zu Zwecken der Veranschaulichung der Erfindung eine nicht zur Erfindung gehörige Blendenleiste 1 gezeigt. Die Blendenleiste ist hier beispielhaft als Abdeckleiste dargestellt, die den Spalt zwischen der Frontscheibe 2 und dem Karosserierahmen 3 eines Kraftfahrzeugs abdeckt.

Die Blendenleiste 1 ist aus insgesamt 3 Kunststoffkomponenten in einem Mehrkomponentenspritzgussverfahren hergestellt. Ein erster, eher spröder, schlagzäher und kratzfester Kunststoff bildet ein im bestimmungsgemäßen Einbauzustand am Fahrzeug nach außen gerichtetes leistenförmiges Dekorteil 4 bzw. eine Dekorschicht 4. Das Dekorteil 4 wird von außen gegen ein ebenfalls leistenförmiges Trägerteil 5 aus einem zweiten Kunststoff angespritzt, das aufgrund seiner eher duktilen und bruchsicheren Materialeigenschaften funktionelle Aufgaben wie die Aufnahme von Befestigungselementen 6 oder die elastische Abstützung von Dichtelementen 7 wahrnimmt. Zur Ausformung des weichelastischen, hier ebenfalls leistenförmigen Dichtelements 7, das sich nach bestimmungsgemäßen Einbau elastisch an die Frontscheibe 2 anlegen soll, wird ein dritter Kunststoff gegen das Trägerteil 5 angespritzt.

In Figur 1 sind neben der eigentlichen Blendenleiste 1 auch die Hauptentformungsrichtung, in der Spritzgusswerkzeug (nicht gezeigt) und Blendenleiste 1 beim Entformungsvorgang voneinander getrennt werden, und die Schieberrichtung des Schiebers (nicht gezeigt), mittels dem eine weitere Kavität für den das Dichtelement 7 abformenden dritten Kunststoff geschaffen wird, eingezeichnet.

Die Ausrichtung des Dichtelements 7 zur Frontscheibe 2 ist maßgeblich durch die Entformungsrichtung bestimmt. Das graphisch und tatsächlich nicht vorhandene über die Blendenleiste 1 gelegte, gestrichelt umrandet eingezeichnete alternative Dichtelement 7' illustriert eine gegenüber der Ausrichtung des tatsächlich vorhandenen Dichtelements 7 bevorzugte Ausrichtung eines solchen Dichtelements, bei der das Dichtelement steiler und mit größerer Kraft gegen die Frontscheibe 2 angestellt werden könnte. Aufgrund des bei dieser Ausrichtung im Hinblick auf die Hauptentformungsrichtung entstehenden Hinterschnitts (graphisch verdeutlicht durch die kreuzschraffierte Fläche), ist diese bevorzugte Ausrichtung aber nicht oder nur sehr umständlich realisierbar.

Figur 2 zeigt eine abgewandelte und zur Erfindung gehörige Ausführungsform der Blendenleiste 1 aus Figur 1. Um die gewünschte Ausrichtung des Dichtelements 7' dennoch zu ermöglichen und gleichzeitig eine dauerfeste Verbindung zwischen dem Trägerteil 5 der Blendenleiste 1 und dem Dichtelement 7' vorzusehen, ist vorgesehen, das Dichtelement 7' als Teil einer Dichtleiste 8 auszubilden, die ein von einer Basisleiste 9 getrenntes Bauteil ist und auf die Basisleiste 9 aufmontiert werden kann. Basisleiste 9 und Dichtleiste 8 bilden dann zusammen die Blendenleiste 1, die in Figur 1 noch als einteiliges und insgesamt im Mehrkomponentenspritzgussverfahren hergestelltes Gesamtbauteil vorlag. Die Dichtleiste 8 kann auf die Basisleiste 9 aufmontiert, insbesondere werkzeuglos aufgesteckt werden und wird über ihre Verbindungsglieder 10, die mit korrespondierenden Gegenstücken 11 an der Basisleiste 9 zusammenwirken, auf der Basisleiste 9 sicher gehalten.

Die Dichtleiste 8 und die Basisleiste 9 sind beim in Figur 2 gezeigten Beispiel beide im 2-Komponentenspritzgussverfahren hergestellt. Das Kunststoffmaterial das zur Herstellung der Verbindungsglieder 10 der Dichtleiste 8 verwendet wird, muss dabei nicht wie das Dichtelement 7' selbst ein weichelastisches Material sein, sondern kann Eigenschaften aufweisen, die für die Verbindung und das Zusammenwirken mit der Basisleiste 9 besonders geeignet sind. Das Dichtelement 7' selbst kann dagegen sehr wohl aus einem weichelastischen Material hergestellt sein, zum Beispiel aus einem thermoplastischen Elastomer, das sich gut für die vom Dichtelement 7' wahrzunehmenden Aufgaben eignet, den an das Material der Verbindungsglieder 10 zu stellenden Anforderungen aber nicht gerecht werden würde. Hinzu kommt, dass durch die materialbezogene Trennung von Dichtleiste 8 und Basisleiste 9 auch Materialpaarungen zum Einsatz kommen können, auf die man ansonsten nicht ohne weiteres zurückgreifen könnte.

Ein Vorteil der in Figur 2 dargestellten Ausführungsform ist außerdem, dass eine Winkel- oder Konturänderung des Dichtelements 7', insbesondere eine Änderung der Dichtlippe, sich einfacher umsetzen lässt, wenn das Dichtelement 7' Teil einer vom Basisteil 9 getrennten Dichtleiste 8 ist. Im 3-Komponentenwerkzeug, was zur Herstellung der in Figur 1 dargestellten Ausführungsform erforderlich ist, ist die Querschnittskontur hingegen wesentlich von der Hauptentformungsrichtung abhängig. Hinzu kommt, dass die Dichtleiste 8 weitgehend universell, insbesondere modellunabhängig, einsetzbarist, da sie auf verschiedenste Basisleisten aufgesteckt werden kann.

Figur 3 zeigt Einzelheit A aus Figur 2. Es ist erkennbar, wie das an der Basisleiste 9 werkstoffeinstückig angeordnete Gegenstück 11 das einen Teil der Dichtleiste 8 bildende Verbindungsglied 10 übergreift. Das Verbindungsglied 10 und mit diesem die gesamte Dichtleiste 8 wird über verschiedene Anschläge 12, die Anlageflächen oder Anlagepunkte ausbilden, an denen die beiden Bauteile aneinander in Anlage sind, sowohl in x- als auch in y-Richtung fixiert und relativ zum Basisteil 9 ausgerichtet. An der Dichtleiste 8 sind Erhebungen 13 in Form von leicht ausgestellten Oberflächenbereichen oder kleinen Fortsätzen vorgesehen, die die Klemmweite K₂ an der Dichtleiste erhöhen und dafür sorgen, dass die Dichtleiste 8 zwischen den Anschlägen 12 und der Basisleisteninnenseite, deren Abstand zueinander durch die Klemmweite K₂ dargestellt ist, dauerhaft elastisch verspannt ist. Relativbewegungen zwischen Basisleiste 9 und Dichtleiste 8 werden so sicher und dauerhaft vermieden. Klappergeräusche oder gar ein Lösen der Dichtleiste 8 von der Basisleiste 9 sind ausgeschlossen.

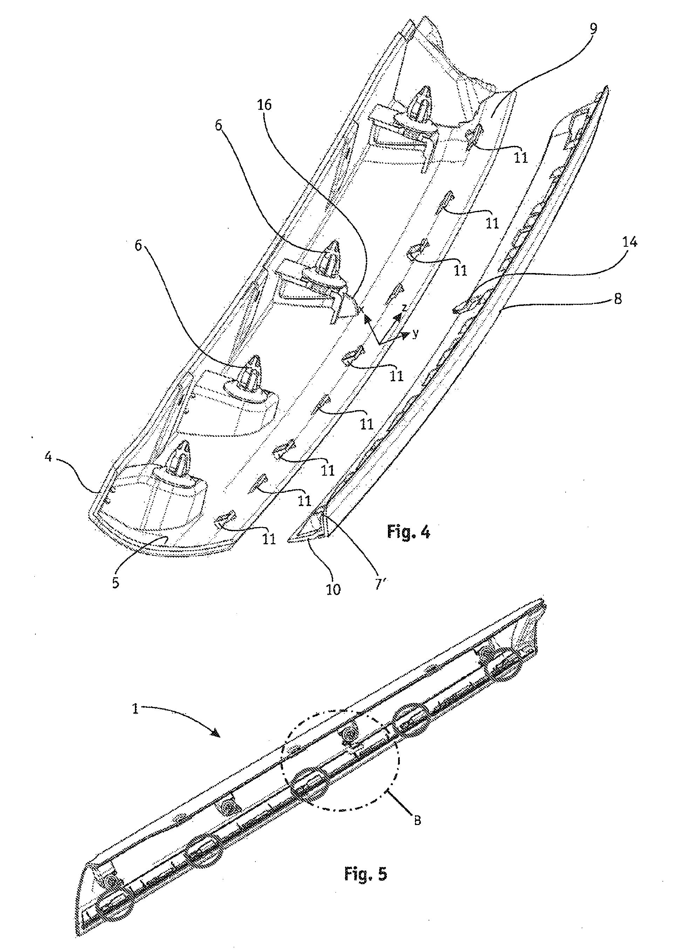

Figur 4 und Figur 5 zeigen die Basisleiste 9 und die Dichtleiste 8 vor dem Aufmontieren (Figur 4) bzw. nach dem Aufmontieren (Figur 5) der Dichtleiste 8 in einer Gesamtschau. Besonders in Figur 4 sind an der Innenseite der Basisleiste 9 die mit dem Verbindungsgliedern 10 korrespondierenden Gegenstücke 11 zu erkennen. Bei der in Figur 4 dargestellten Basisleiste 9 sind eine Vielzahl von Gegenstücken 11 vorgesehen, die nach dem Aufmontieren der Dichtleiste 8 deren Verbindungsglieder 10 klemmend übergreifen, um die Dichtleiste insbesondere in x- und y-Richtung an der Basisleiste zu fixieren.

In Figur 4 und Figur 5 ist außerdem ein Sicherungselement 14 zu erkennen, über das die Dichtleiste 8 in z-Richtung auf dem Basisteil 9 gehalten wird. Das Sicherungselement 14 ist von einem federnd gelagerten Rastglied gebildet, dass bei der Montage der Dichtleiste 8 auf dem Basisteil zunächst einfedert, um anschließend einen Rastvorsprung 15 auf der Basisleiste 9 rückfedernd zu hintergreifen. Der Rastvorsprung 15 ist hier beispielhaft durch eine an der Innenseite der Basisleiste vorgesehene Versteifungsrippe gebildet.

Zur Montage der Dichtleiste 8 auf der Basisleiste 9 werden die Verbindungsglieder 10 der Dichtleiste 8 bzw. die darin vorgesehenen Aufnahmen in Überdeckung mit den an der Basisleiste vorgesehenen, korrespondierenden Gegenstücken 11 gebracht. Sodann wird die Dichtleiste 8 leicht in negativer x-Richtung angedrückt und auf die Basisleiste 8 aufgesetzt, um anschließend in positiver z-Richtung verschoben zu werden, bis die Verbindungsglieder 10 mit z-Anschlägen 18 an der Basisleiste in Anlage kommen und das Sicherungselement 14 durch Verrastung mit der Basisleiste 9 gegen ein Verrutschen in negativer z-Richtung sichert.

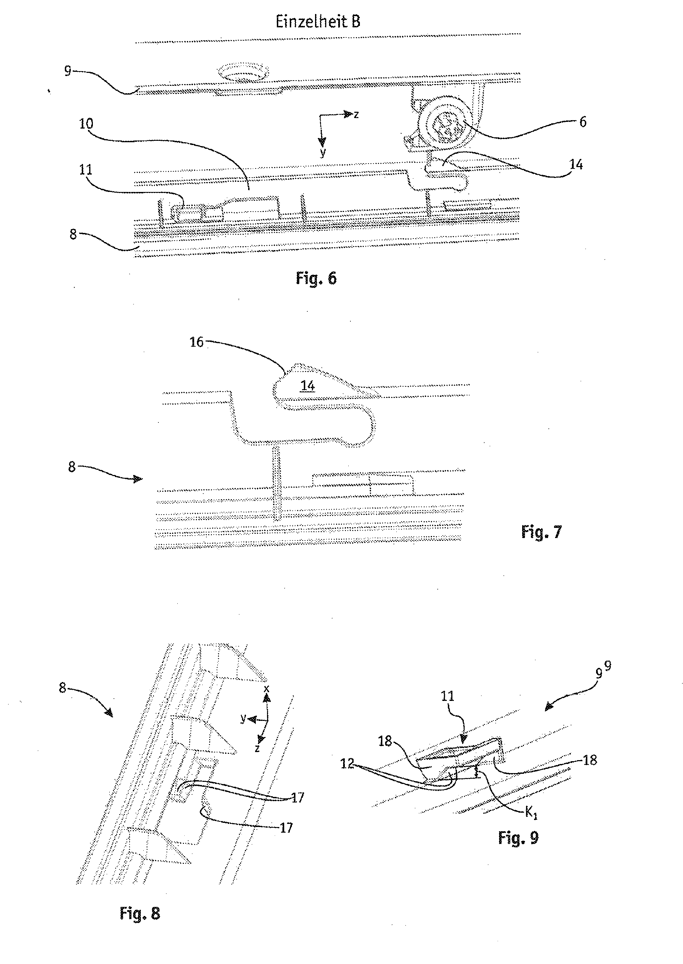

Figur 6 zeigt Einzelheit B aus Figur 5. Es ist zu erkennen, wie ein Verbindungsglied 10 mit einem korrespondierenden Gegenstück 11 ineinander greift und wie das Sicherungselement 14 einen Rastvorsprung 15, hier beispielhaft eine Verstärkungsrippe, formschlüssig hintergreift.

Figur 7 verdeutlicht im Detail eine mögliche Ausbildung des Sicherungselements 17. An der im bestimmungsgemäßen Einbauzustand dem Rastvorsprung 15 zugewandten Rastkante 16 ist es treppenartig ausgebildet. Der unstete Kantenverlauf sorgt dafür, dass die Kante 16 den Rastvorsprung 15 aufgrund der Vielzahl der potentiell in Frage kommenden Widerlagerflächen in unterschiedlichen Winkelstellungen sicher und spielfrei hintergreifen kann, so dass die Dichtleiste 8 unabhängig davon, wie weit sie in positiver z-Richtung auf die Basisleiste 9 aufgeschoben werden kann, spielfrei gehalten wird. Damit ist ein spielfreies Verrasten stets gewährleistet, auch wenn die exakte Position, die die Bauteile in Relation zueinander letztlich tatsächlich einnehmen, aufgrund von Materialelastizitäten, unvermeidbaren Toleranzen zwischen den Bauteilen sowie aufgrund Fertigungsungenauigkeiten nicht im Voraus absolut bestimmbar ist.

Figur 8 zeigt die von einem Verbindungselement 10 gebildete Aufnahme für die korrespondierenden Gegenstücke, die randseitig und in einem bei der Aufschiebebewegung in positiver z-Richtung voreilenden Bereich konisch zulaufende Montageschrägen 17 aufweist. Dies ermöglicht insbesondere ein einfaches Einfädeln und eine im Rahmen der Aufschiebebewegung im Wesentlichen selbsttätige Ausrichtung der Dichtleiste. Die Montageschrägen 17 stellen durch ihre Schrägstellung außerdem die Dichtleiste 8 während der Aufschiebebewegung zunehmend gegen die Innenfläche der Basisleiste 9 an.

Figur 9 zeigt ein zu dem in Figur 8 gezeigten Verbindungselement 10 korrespondierendes Gegenstück 11 im Detail. Die Klemmweite K₁ am Gegenstück ist geringfügig geringer als die Klemmweite bzw. Materialstärke K₂ an der Dichtleiste, wie in Figur 3 gezeigt. Das in Figur 9 dargestellte Gegenstück 11 zeigt außerdem einen z-Anschlag 18, also eine Anschlägfläche, die die Aufschiebebewegung der Dichtleiste in positiver z-Richtung begrenzt.

### Bezugszeichenliste

- 1: Blendenleiste
- 2: Frontscheibe
- 3: Karosserierahmen
- 4: Dekorteil
- 5: Trägerteil
- 6: Befestigungselement
- 7, 7': Dichtelement
- 8: Dichtleiste
- 9: Basisleiste
- 10: Verbindungsglieder
- 11: Gegenstücke
- 12: Anschläge
- 13: Erhebungen
- 14: Sicherungselement
- 15: Rastvorsprung
- 16: Rastkante
- 17: Montageschrägen
- 18: z-Anschlag
- K₁: Klemmweite an den Gegenstücken
- K₂: Klemmweite am Verbindungsglied

## Patentansprüche

1. Aufbau einer Blendenleiste (1), die als Anbauteil für ein Kraftfahrzeug dient, wobei die Blendenleiste (1) eine Basisleiste (9) und eine an der Basisleiste (9) befestigte oder bestimmungsgemäß befestigbare Dichtleiste (8) umfasst, wobei die Dichtleiste (8) eine Dichtlippe (7') zur Abdichtung und/oder optischen Überbrückung eines im bestimmungsgemäßen Einbauzustand zwischen der Blendenleiste (1) und einer benachbarten Fahrzeugoberfläche entstehenden Spalts aufweist, wobei die Dichtleiste (8) ein oder mehrere Verbindungsglieder (10) aus einem gegenüber dem Material der Dichtlippe (7') struktursteiferen Material aufweist und die Dichtleiste (8) als von der Basisleiste (9) getrenntes oder trennbares Bauteil mittels der Verbindungsglieder (10) über an der Basisleiste (9) befindliche, korrespondierende Gegenstücke (11) mit der Basisleiste (9) verbindbar ist, **dadurch gekennzeichnet, dass**
die Paarung aus Verbindungsgliedern (10) und korrespondierenden Gegenstücken (11) derart ausgestaltet ist, dass die Dichtleiste (8) durch eine Schiebebewegung in Längsrichtung der Leiste (1) (z-Richtung) mit der Basisleiste (9) verrastet, um die Ausrichtung der Dichtleiste (8) an der Basisleiste (9) festzulegen.

2. Blendenleistenaufbau nach Anspruch 1, **dadurch gekennzeichnet, dass** das Material der Dichtlippe (7') an das Material der Verbindungsglieder (10) angespritzt ist.

3. Blendenleistenaufbau nach Anspruch 1 oder 2, **dadurch gekennzeichnet, dass** die Dichtleiste (8) im Mehrkomponentenspritzguss hergestellt ist.

4. Blendenleistenaufbau nach einem der vorhergehenden Ansprüche, **dadurch gekennzeichnet, dass** die Paarung aus Verbindungsgliedern (10) und korrespondierenden Gegenstücken (11) derart ausgestaltet ist, dass die Dichtleiste (8) zunächst in einer im Wesentlichen senkrecht zur Innenfläche der Basisleiste (9) gerichteten Aufsetzbewegung auf die Basisleiste (9) aufzusetzen ist und sodann durch eine parallel zur besagten Innenseite gerichteten Schiebebewegung mit der Basisleiste (9) verrastet, um die Dichtleiste (8) relativ zur Basisleiste (9) zu fixieren.

5. Blendenleistenaufbau nach einem der vorherigen Ansprüche, **dadurch gekennzeichnet, dass** an der Dichtleiste (8) und an der Basisleiste (9) ein oder mehrere Anschläge (12, 18) vorgesehen sind, die Anschlagpunkte oder Anschlagflächen ausbilden, an denen Verbindungsglieder (10) und Gegenstücke (11) als Begrenzung einer Montagebewegung aneinander anstoßen, um die Ausrichtung der Dichtleiste (8) an der Basisleiste (9) festzulegen.

6. Blendenleistenaufbau nach einem der vorhergehenden Ansprüche, **dadurch gekennzeichnet, dass** zumindest ein Sicherungselement (16) an der Dichtleiste (8) und/oder der Basisleiste (9) vorgesehen, dass im Rahmen einer Montagebewegung zunächst einfedert um anschließend zur räumlichen Fixierung der Dichtleiste (8) auf der Basisleiste (9) ein Bauteil des jeweils anderen Blendenleistenteils rückfedernd formschlüssig zu hintergreifen.

7. Blendenleistenaufbau nach einem der vorhergehenden Ansprüche, dass die Dichtleiste (8) bei ordnungsgemäßem Zusammenbau dauerhaft gegen die Innenfläche der Basisleiste (9) angestellt ist.

8. Blendenleistenaufbau nach einem der vorhergehenden Ansprüche, **dadurch gekennzeichnet, dass** die Klemmweite K₁ der Gegenstücke (11) an der Basisleiste (9) geringfügig kleiner ist als die Klemmweite K₂ der Verbindungsglieder (10) an der Dichtleiste (8).

9. Blendenleistenaufbau nach einem der vorhergehenden Ansprüche, **dadurch gekennzeichnet, dass** an der der Innenfläche der Basisleiste (9) bei bestimmungsgemäßen Zusammenbau zugewandten Seite der Dichtleiste (8) Erhebungen vorgesehen sind, die bei der Aufsetzbewegung und/oder der anschließenden Aufschiebebewegung zur Erzeugung einer Klemmwirkung zwischen Basisleiste (9) und Dichtleiste (8) ein Einfedern der mit Verbindungsgliedern (10) versehenen Abschnitte der Dichtleiste (8) und/oder der Verbindungsglieder (10) selbst ermöglichen.

10. Blendenleistenaufbau nach einem der beiden vorhergehenden Ansprüche, **dadurch gekennzeichnet, dass** zumindest ein Teil der Verbindungsglieder (10) und/oder zumindest ein Teil der korrespondierenden Gegenstücke (11) Montageschrägen (17) aufweisen.

## Claims

1. A structure of a cover strip (1), which acts as an attachment part for a motor vehicle, wherein the cover strip (1) comprises a base strip (9) and a sealing strip (8), which is fastened or can be fastened as intended to the base strip (9), wherein the sealing strip (8) has a sealing lip (7') for sealing off and/or visually bridging a gap that is produced between the cover strip (1) and an adjacent vehicle surface when installed as intended, wherein the sealing strip (8) has one or a plurality of connecting members (10) consisting of a material that has a more rigid structure than the material of the sealing lip (7') and the sealing strip (8) can be connected to the base strip (9) as a component that is separate or can be separated from the base strip (9) by means of the connecting members (10) via corresponding counterpieces (11) situated on the base strip (9), **characterised in that**
the pairing of connecting members (10) and corresponding counterpieces (11) is formed in such a manner that the sealing strip (8) latches with the base strip (9) by means of a pushing movement in the longitudinal direction of the strip (1) (z direction), in order to define the alignment of the sealing strip (8) on the base strip (9).

2. The cover strip structure according to Claim 1, **characterised in that**
the material of the sealing lip (7') is injection-moulded onto the material of the connecting members (10).

3. The cover strip structure according to Claim 1 or 2, **characterised in that**
the sealing strip (8) is produced using multicomponent injection moulding.

4. The cover strip structure according to any one of the preceding claims,
**characterised in that**
the pairing of connecting members (10) and corresponding counterpieces (11) is formed in such a manner that the sealing strip (8) is first placed onto the base strip (9) in a placement movement directed essentially perpendicularly to the inner face of the base strip (9) and then latched with the base strip (9) by a pushing movement directed parallel to the said inner side, in order to fix the sealing strip (8) relative to the base strip (9).

5. The cover strip structure according to any one of the preceding claims,
**characterised in that**
one or a plurality of stops (12, 18) are provided on the sealing strip (8) and on the base strip (9), which stops form stop points or stop faces at which connecting members (10) and counterpieces (11) butt against each other to limit an installation movement, in order to define the alignment of the sealing strip (8) on the base strip (9).

6. The cover strip structure according to any one of the preceding claims,
**characterised in that**
at least one securing element (16) is provided on the sealing strip (8) and/or base strip (9), which securing element is first deflected during an installation movement, in order then to engage behind a component of the respective other cover strip part in a form-fitting, resilient manner for the spatial fixing of the sealing strip (8) on the base strip (9).

7. The cover strip structure according to any one of the preceding claims, **characterised in that**
the sealing strip (8) is set permanently against the inner face of the base strip (9), when assembled properly.

8. The cover strip structure according to any one of the preceding claims,
**characterised in that**
the clamping width K1 of the counterpieces (11) on the base strip (9) is slightly smaller than the clamping width K2 of the connecting members (10) on the sealing strip (8).

9. The cover strip structure according to any one of the preceding claims,
**characterised in that**
raised portions are provided on the side of the sealing strip (8) that faces the inner face of the base strip (9) when assembled properly, which raised portions allow deflection of the sections of the sealing strip (8) provided with connecting members (10) and/or of the connecting members (10) themselves during the placement movement and/or the subsequent pushing movement to produce a clamping effect between the base strip (9) and the sealing strip (8).

10. The cover strip structure according to any one of the two preceding claims,
**characterised in that**
at least some of the connecting members (10) and/or at least some of the corresponding counterpieces (11) have installation bevels (17).

## Revendications

1. Montage d'une baguette d'obturation (1), qui sert de pièce rapportée pour un véhicule automobile, dans lequel la baguette d'obturation (1) comprend une baguette de base (9) et une baguette d'étanchéité (8) fixée ou fixable de manière conforme à la destination sur une baguette de base (9), dans lequel la baguette d'étanchéité (8) présente une lèvre d'étanchéité (7') pour étanchéifier et/ou combler optiquement un interstice généré en l'état de montage conforme à la destination entre la baguette d'obturation (1) et une surface de véhicule adjacente, dans lequel la baguette d'étanchéité (8) présente un ou plusieurs organes de liaison (10) en un matériau à structure plus rigide que le matériau de la lèvre d'étanchéité (7') et la lèvre d' étanchéité (8) peut être reliée à la baguette de base (9) comme un composant séparé ou séparable de la baguette d'étanchéité (9) au moyen des organes de liaison (10) par l'intermédiaire des pièces complémentaires (11) correspondantes, se trouvant sur la baguette de base (9), **caractérisé en ce que** la paire d'organes de liaison (10) et de pièces complémentaires correspondantes (11) est conçue de telle sorte que la baguette d'étanchéité (8) s'encliquète via un mouvement de coulissement dans la direction longitudinale de la baguette (1) avec la baguette de base (9), afin d'immobiliser l'alignement de la baguette d'étanchéité (8) sur la baguette de base (9).

2. Montage de baguette d'obturation selon la revendication 1, **caractérisé en ce que** le matériau de la lèvre d'étanchéité (7') est moulé par injection sur le matériau des organes de liaison (10).

3. Montage de baguette d'étanchéité selon les revendications 1 ou 2, **caractérisé en ce que** la baguette d'étanchéité (8) est fabriquée par moulage par injection multi-composants.

4. Montage de baguette d'étanchéité selon une des revendications précédentes, **caractérisé en ce que** la paire d'organes de liaison (10) et de pièces complémentaires correspondantes (11) est conçue de telle sorte que la baguette d'étanchéité (8) soit posée en prmeier lieu sur la baguette de base (9) dans un mouvement de pose orienté essentiellement perpendiculairement à la surface intérieure de la baguette de base (9) et s'encliquète ensuite avec la baguette de base (9) via un mouvement de coulissement orienté parallèlement audit côté intérieur, afin de fixer la baguette d'étanchéité (8) par rapport à la baguette de base (9).

5. Montage de baguette d'obturation selon une des revendications précédentes, **caractérisé en ce que** sur la baguette d'étanchéité (8) et sur la baguette de base (9) une ou plusieurs butées (12,18) sont prévues, qui forment des pointes de butée ou surfaces de butée, sur lesquels des organes de liaison (10) et pièces complémentaires (11) viennent butée les uns sur les autres pour limiter un mouvement de montage, afin d'immobiliser l'alignement de la baguette d'étanchéité (8) sur la baguette de base (9).

6. Montage de baguette d'obturation selon une des revendications précédentes, **caractérisé en ce que** au moins un élément de fixation (16) est prévu sur la baguette d'étanchéité (8) et/ou la baguette de base (9), qui dans le cadre d'un mouvement de montage d'abord par retrait élastique pour, suite à la fixation spatiale de la baguette d'étanchéité (8) sur la baguette de base (9), venir en prise par l'arrière par conjonction de forme et par rappel élastique avec un composant de l'autre partie respective de la baguette d'étanchéité.

7. Montage de baguette d'obturation selon une des revendications précédentes, **caractérisé en ce que** la baguette d'étanchéité (8) en cas d'un assemblage conforme vient reposer durablement contre la surface intérieure de la baguette de base (9).

8. Montage de baguette d'obturation selon une des revendications précédentes, **caractérisé en ce que** l'entraxe K₁ des pièces complémentaires (11) sur la baguette de base (9) est plus petit que l'entraxe K₂ des organes de liaison (10) sur la baguette d' étanchéité (8).

9. Montage de baguette d'obturation selon une des revendications précédentes, **caractérisé en ce que** sur le côté de la baguette d'étanchéité (8) tourné vers la surface intérieure de la baguette de base (9) en cas d'assemblage conforme, des méplats sont prévus, qui lors du mouvement de pose et/ou du mouvement de coulissement consécutif pour produire un effet- de serrage entre la baguette de vase (9) et la baguette d'étanchéité (8) permettent un retrait élastique des portions pourvues d'organes de liaison (10) de la baguette d'étanchéité (8) et/ou des organes de liaison (10).

10. Montage de baguette d'obturation selon une des deux revendications précédentes, caractérisé ce que au moins une partie des organes de liaison (10) et/ou au moins une partie des pièces complémentaires correspondantes (11) présentent des chanfreins de montage (17).
